(19) **Europäisches Patentamt**

**European Patent Office**

**Office européen des brevets**

(11) **EP 0 765 838 B1**

(12) **EUROPÄISCHE PATENTSCHRIFT**

(45) Veröffentlichungstag und Bekanntmachung des Hinweises auf die Patenterteilung:
**15.03.2000   Patentblatt 2000/11**

(51) Int Cl.7: **C01B 7/04**

(21) Anmeldenummer: **96114712.1**

(22) Anmeldetag: **13.09.1996**

(54) **Verfahren zur Aufarbeitung der Reaktionsgase bei der Oxidation von HCl zu Chlor**

Process for the treatment of the reaction gases during the oxydation of HCl to chlorine

Procédé de traitement des gaz réactionnels lors de l'oxydation de HCl en chlore

(84) Benannte Vertragsstaaten:
**AT BE CH DE ES FR GB IT LI NL SE**

(30) Priorität: **26.09.1995   DE 19535716**

(43) Veröffentlichungstag der Anmeldung:
**02.04.1997   Patentblatt 1997/14**

(73) Patentinhaber: **BAYER AG**
**51368 Leverkusen (DE)**

(72) Erfinder:
• **Gestermann, Fritz, Dr.**
**51377 Leverkusen (DE)**

• **Schneider, Jürgen**
**51109 Köln (DE)**
• **Dummersdorf, Hans-Ulrich, Dr.**
**51399 Burscheid (DE)**
• **Härle, Helmut, Dr.**
**51375 Leverkusen (DE)**
• **Minz, Franz-Rudolf, Dr.**
**41542 Dormagen (DE)**
• **Waldmann, Helmut, Dr.**
**52385 Nideggen (DE)**

(56) Entgegenhaltungen:
**EP-A- 0 233 773          EP-A- 0 517 427**
**EP-A- 0 711 728**

**Beschreibung**

Die Erfindung geht aus von einem Verfahren zur Aufarbeitung des in einem Reaktor bei der Oxidation von Chlorwasserstoff zu Chlor und Wasser entstehenden Reaktionsgases aus Chlor, Chlorwasserstoff, Wasserdampf und Restsauerstoff.

Die Umwandlung von HCl zu Chlor ist bereits mit einer Reihe von Verfahren technisch realisiert worden. Neben der Salzsäureelektrolyse gibt es zwei Verfahrenstypen zur nicht elektrochemischen Umwandlung von HCl zu Chlor. Es handelt sich dabei um die naßchemischen Verfahren und die Gasphasenreaktionen. Zu den naßchemischen Verfahren zählen der Kel-Chlor Prozeß [1] und das $H_2O_2$ - Verfahren von Degussa [2]. Bei den Gasphasenverfahren sind als bedeutendste zu nennen:

das Shell Verfahren [3]
der MTC-Prozeß [4] und
das USC-Verfahren [5].

Diese Verfahren arbeiten mit einem Wirbelbett mit Kupferchlorid (USC, Shell) bzw. Chromoxid, (MTC) als Katalysator auf einem porösen Träger. Die Aufarbeitung der Reaktionsgase, bestehend aus $Cl_2$, HCl, $O_2$, $H_2O$, erfolgt nach unterschiedlichen Verfahren. Beim USC-Verfahren wird das Reaktionswasser in einer Stufe des zweistufigen Reaktors abgetrennt und ausgeschleust. Wegen des hohen Sauerstoffüberschusses, der zum Transport von Wirbelbettmaterial von einer zur anderen Stufe benötigt wird, ist das in der zweiten Stufe gebildete Chlor sehr sauerstoffreich und läßt sich wirtschaftlich nicht durch einfaches Verdichten und Verflüssigen vom Inertgas befreien. Aus diesem Grund wird mit einem Absorber-Stripper System gearbeitet, bei dem $CCl_4$ als Adsorber eingesetzt wird. Der großtechnische Einsatz von $CCl_4$ ist jedoch aus gesundheitlichen Gründen bedenklich und in Zukunft sogar verboten. Nachteilig ist außerdem der aufwendige Transport von großen Mengen von Wirbelbettmaterial zwischen den beiden Reaktorstufen, die darüber hinaus jeweils aufgewärmt und abgekühlt werden müssen. Die Zweistufigkeit ist in diesem Fall nur erforderlich, um das Reaktionwasser selektiv abzutrennen.

Dagegen arbeitet das Shell-Verfahren [3] einstufig, sodaß in der Aufarbeitung auch das Reaktionswasser mit abgetrennt werden muß. In [6] wird zwar ein Verfahren beschrieben, das durch eine geschickte Betriebsweise von Kolonnen im unter- bzw. überazeotropen Bereich ermöglicht, das nicht umgesetzte HCl-Gas vollständig in den Reaktor zurückzuführen; aufgrund der großen Inertgasmengen, die zum Betrieb des Wirbelbettreaktors notwendig sind, ist jedoch der Chlorgehalt des abgehenden HCl- und $H_2O$ - freien Gases so niedrig, daß die Bedingungen für die nachfolgende Chlorverflüssigung ziemlich ungünstig sind. Man hat deshalb auch hier eine Absoption/Desorption des nicht

verflüssigten Chlors an $CCl_4$ als Absorber gewählt, um die Inertgase abzutrennen.

Auch die Abtrennung des gesamten Reaktionswassers mit Hilfe von Schwefelsäure gemäß einer Verfahrensvariante der Shell Oil Company [7] hat an der Inertgasproblematik wenig geändert, sodaß auch hier ein Absorber-Strippersystem mit $CCl_4$ als Absorber nachgeschaltet werden mußte.

Schließlich wird bei dem MTC-Prozeß [4] ebenfalls mit Sauerstoffüberschuß im Reaktor gearbeitet, sodaß auch hier eine Absorptions-Desorptionsstufe mit $CCl_4$ als Absorber nachgeschaltet werden muß. Darüber hinaus wird in [8] beschrieben, die vorgeschlagene Chlorreinigung m.H. des sog. Pressure Swing Adsorptions-Verfahren durchzuführen.

Der Erfindung liegt die Aufgabe zugrunde, ein Gesamtverfahren zur Aufarbeitung der Reaktionsgase bei der Salzsäureoxidation zur Chlorgewinnung zu entwickeln, das ohne die oben beschriebenen Absorptions-Desorptionsstufen mit Fremdabsorbern auskommt. Außerdem soll bei dem neuen Verfahren konsequent die thermodynamische Optimierung im System Salzsäure/Chlor ausgenutzt werden.

Diese Aufgabe wird mit dem im Hauptanspruch angegebenen Verfahren gelöst. Weiterentwicklungen und bevorzugte Ausführungsformen sind in den Unteransprüchen beschrieben.

Der Hauptvorteil des Verfahrens besteht darin, daß bei der Aufarbeitung der Produktgase bis auf kleine Mengen an Schwefelsäure zur Produktgastrocknung auf Fremdmedien verzichtet werden kann. Vielmehr werden konsequent die thermodynamischen Möglichkeiten des Systems Salzsäure/Flüssigchlor für die einzelnen Verfahrensschritte genutzt. Dadurch kann auf problematische Lösungsmittel, wie z.B. $CCl_4$, zur Rückführung nicht aufarbeitbarer Chlormengen in den Prozeß, verzichtet werden. Durch Vermeidung von Fremdwasser zur Abscheidung von HCl-Anteilen im Produktgas wird keine unerwünschte Dünnsäure erzeugt.

Das gesamte Gas-Aufarbeitungssystem hinter dem Reaktor mit den Stufen:

Einspritzkühler, Phasentrennapparat, Trocknung, rekuperative Chlorverflüssigung/-destillation, Purgegasreinigung mit Salzsäure über ein Absorber-Strippersystem und Rückführung der Nutzgase über den Einsatzsauerstoff als Schleppgas

stellt ein sehr energiesparendes und übersichtliches Verfahren dar.

Nachfolgend werden die einzelnen Stufen mit ihren Vorteilen nacheinander erläutert. Bei der Optimallösung des Verfahrens wird von allen Stufen Gebrauch gemacht. Bei weniger großen Anforderungen kann auf einzelne Stufen verzichtet werden.

Der Einspritzkühler arbeitet mit der Direkteindüsung von konzentrierter gekühlter Salzsäure.

Überschüsse dieser Salzsäure, die auch mit Spuren von katalytischer Salzschmelze aus dem Reaktor beladen sein können, werden gemäß einer Weiterentwicklung des Verfahrens in einem eigenen Quenchkühlkreislauf bzgl. verschleppter Katalysatormengen angereichert und auf eine im Reaktorkopfteil angeordnete Vorquenche gegeben. Sie können auch zur Auflösung der erstarrten Schmelze im Reaktor nach Kaltstillständen genutzt werden. Auf diese Weise wird eine Rückführung ausgetriebener Katalysatormengen erreicht.

Das Reaktionswasser wird in dem als Gegenstromkolonne ausgebildeten Phasentrennapparat durch Direktkondensation an umlaufender, konzentrierter, gekühlter Salzsäure abgetrennt. Dies hat zwei Vorteile:

a) Das vom Reaktionswasser befreite Produktgas hat wegen des geringen Wasserdampfpartialdrucks über konzentrierter Salzsäure nur eine geringe Restfeuchte, was sich in der Trocknung der Reaktionsgase positiv auf den Verbrauch an Trokkensäure (z.B. Schwefelsäure) auswirkt.

b) Die ablaufende, gesättigte konzentrierte Salzsäure hat einen der Reaktionswassermenge entsprechenden Teil des nicht umgesetzten HCl-Gases aufgenommen und kann für weitere Verfahrensschritte genutzt werden.

Es wird bewußt auf eine vollständige Abtrennung der HCl-Anteile im Produktgas verzichtet, da hierfür Fremdwasser benötigt würde. Bei den weiteren Aufarbeitungsschritten verhalten sich die HCl-anteile ähnlich wie Inertgase.

Zur Abtrennung der Inerte und der HCl-Reste muß das Chlor verflüssigt werden.

Die Kälteleistung bei der Chlorverflüssigung wird dabei aus dem Chlor selbst bezogen. Flüssiges Chlor wird als Kältemittel genutzt. Hierzu wird das aus der Verflüssigung unter Druck ablaufende Flüssigchlor auf den Abgabedruck zum Verbraucher im Chlorverflüssiger sekundärseitig entspannt. Dabei kühlt es sich entsprechend der Druckabsenkung ab und entzieht bei seiner Verdampfung dem primärseitig unter Druck angebotenen Chlor die Kondensationswärme, verflüssigt dies und trennt dabei die Inertgase und das HCl-Gas ab. Vorteilhaft bei dieser Verfahrensweise ist die beträchtliche Einsparung an Fremdkälte zur Chlorverflüssigung sowie an Fremdwärme zur Chlorverdampfung. Eine kleine Kälteanlage dient lediglich der Chlor-Nachverflüssigung bei tieferen Temperaturen. Hierdurch wird der Chloranteil im Restgas soweit verringert, daß bei dessen Rückführung in den Reaktor das Reaktionsgleichgewicht nicht nennenswert gestört wird.

Bei der Chlorverflüssigung geht ein Teil des HCl-Gases physikalisch in Lösung. Für den Fall, daß die HCl-Anteile die nachfolgenden Reaktionen stören, bietet sich eine Abtrennung über eine einfache Destillationskolonne an. Der Aufwand ist gering, da die Siedelinien von Chlor und HCl ca. 50°C auseinanderliegen. Die Chlor-Destillation kann bei relativ niedrigen Temperaturen mit Abfallwärme erfolgen, da die Siedetemperatur von Chlor bei dem Verflüssigungsdruck bei etwa 20°C liegt. Vorteilhaft wird das HCl-reiche Kopfgas der Destillation wieder auf die Saugseite des Chlorverdichters zurückgeführt. Hierdurch steigt zwar der HCl-Anteil im Chlor vor der Verflüssigung an; die physikalische Löslichkeit von HCl im Flüssigchlor nimmt jedoch erheblich weniger zu, so daß auf diese Weise das HCl-Gas nahezu vollständig mit dem nicht umgesetzten Sauerstoff und den Chlorresten in den Recyclestrom zum Reaktor zurückgeschickt werden kann.

Ein spezielles Problem bei der Produktgasaufarbeitung ist die Steuerung des Fremdgaspegels im Produktgasstrom. Fremdgase werden mit den Eduktgasen, speziell mit dem HCl-Gas aus vorlaufenden Produktionsschritten, eingespeist.

Über die Rückführung nicht umgesetzter Eduktgasanteile in den Reaktor würde sich der Fremdgaspegel ständig erhöhen und schließlich den Verfahrensablauf empfindlich stören. Es muß also eine Teilmenge des Recyclegases ausgeschleust werden, was einen nicht unerheblichen Verlust an Chlor und HCl-Gas bedeuten würde. Darüberhinaus müßten diese Gase durch eine Absorptionsanlage geschickt werden, wo sie unter Verbrauch von Chemikalien, z.B. Natronlauge, neutralisiert und als salzbelastete Abwasserfracht abgegeben werden müßten.

Zur Rückführung der Nutzgasanteile Chlor und HCl aus dem von der Nachkühlstufe hinter der Chlorverflüssigung kommenden Rücklaufstrom (im folgenden als "Purgegas" bezeichnet) zum Reaktor wird besonders vorteilhaft die aus der Reaktionswasserabtrennung (Phasentrennapparat bzw. Gegenstromkolonne) stammende, gesättigte, konzentrierte Salzsäure genutzt. Zu diesem Zweck wird die aus der Strip-Kolonne ablaufende, konzentrierte Salzsäure gekühlt und in der Absorberkolonne unter Druck im Gegenstrom mit den unter Kompressionsdruck stehenden Purgegasen in einem Rieselfilm in Kontakt gebracht. Unter Ausnutzung der guten Löslichkeit von Chlor in konzentrierter Salzsäure und der hohen Aufnahmefähigkeit einer konzentrierten und unter die Sättigungstemperatur abgekühlten Salzsäure für weitere HCl-Mengen wird diese Salzsäure weiter aufkonzentriert und mit Chlor beladen. Dabei heizt sie sich durch die Solvationswärme auf. Diese Salzsäure wird auf Normaldruck entspannt, mit der ablaufenden heißen Reaktionswasser-Salzsäure vereinigt und auf die Strip-Kolonne gegeben. Mit dem Einsatzsauerstoff als Schleppgas, der im Gegenstrom unten aufgegeben wird, wird die Salzsäure von der Chlorbeladung und von HCl-Überschußmengen befreit, wobei diese sich unter Entzug der Solvationswärme abkühlt. Die abgekühlte Salzsäure wird unter Druck wieder in die Absorberkolonne eingespeist und kann den Beladezyclus wiederholen. Der Purgegasstrom kann auf diese Weise bis auf geringfügige Reste von Chlor und HCl-Gas befreit werden. Fremdmedien werden auch hierfür nicht benötigt.

Der beladene Sauerstoff wird in den Reaktor eingespeist. Die dem Reaktionswasser entsprechende Salzsäure kann in der gewünschten Konzentration ausgeschleust werden und stellt ein wertvolles Nebenprodukt dar.

So haben schließlich fast alle Ströme edukt- und produktseitig über deren eigentliche Funktion hinaus thermodynamisch Arbeit zu verrichten und helfen dabei den Einsatz von Fremdmedien zu vermeiden.

In einer besonders vorteilhaften Variante zum beschriebenen Verfahren wird der aus dem Phasentrennapparat ablaufende Strom der Reaktionswasser-Salzsäure nicht unmittelbar gekühlt und oben wieder eingespeist, wobei nur die dem Reaktionswasser entsprechende Menge in die Stripperkolonne abläuft. Vielmehr wird der gesamte umlaufende Salzsäurestrom in die Strip-Kolonne weitergeleitet, dort mit Einsatzsauerstoff und ggf. zusätzlicher Wärmezufuhr abgereichert, gekühlt und auf den Phasentrennapparat wieder aufgegeben. Hierdurch wird zusätzlich HCl-Gas aus dem Produktgasstrom eingebunden, über die Strip-Kolonne wieder ausgeblasen und mit dem Einsatzsauerstoff unmittelbar wieder in den Reaktor zurückgegeben. Durch entsprechende Erhöhung dieses Salzsäureumlaufs wird schließlich der HCl-Gasanteil im Produktgasstrom soweit abgesenkt, daß auf die Destillation des Flüssigchlors zur Abtrennung gelöster HCl-Mengen verzichtet werden kann. Die Verringerung der Inertgasanteile im Produktgasstrom verbessert darüberhinaus die Bedingungen für die Chlorverflüssigung, so daß der Anteil Fremdkälte zur Chlor-Nachverflüssigung deutlich zurückgeht und die nicht kondensierte Chlormenge, die in den Reaktor zurückgeführt werden muß, ebenfalls erheblich abnimmt.

Im folgenden werden Ausführungsbeispiele der Erfindung an Hand von Zeichnungen näher erläutert.

Es zeigen

Fig. 1    ein komplettes Verfahrensfließbild für das Aufarbeitungsverfahren und

Fig. 2    ein Verfahrensschema für eine Variante, bei der die gesamte Menge der bei der Reaktionswasserabtrennung vorhandenen Salzsäure im Kreislauf durch die Strip-Kolonne geführt wird.

Im Reaktor 1, dem als Edukte gasförmiges HCl und Sauerstoff zugeführt werden, erfolgt die Direktoxidation von HCl zu freiem Chlor nach der Reaktionsgleichung:

$$4\,HCl + O_2 \Rightarrow 2\,Cl_2 + 2\,H_2O$$

Dabei liegt z.B. das Deacon-Verfahren zugrunde, bei dem die beiden gasförmigen Edukte in dem aus einem Phasenkontaktapparat bestehenden Reaktor 1 mit einer heißen $CuCl_2$ - Salzschmelze als Katalysator in Kontakt gebracht werden. Als Phasenkontaktapparat ist insbesondere ein Rieselfilmreaktor, z.B. eine Füllkörperkolonne, geeignet. Die aus $Cl_2$, HCl, $O_2$, und dampfförmigen $H_2O$ bestehenden heißen Reaktionsgase (Rohgas) werden unmittelbar nach Verlassen des Reaktors 1 in einem Einspritzkühler 2 (Quenche) abgekühlt. In die Quenche 2 wird aus der Aufarbeitung stammende, gekühlte Salzsäure eingespritzt. Die so abgekühlten Gase treten zusammen mit der verdampften Salzsäure von unten in eine Phasentrennkolonne 3 zur Reaktionswasserabtrennung ein. Die Phasentrennkolonne besteht hier aus einer Gegenstromkolonne mit z. B. mit Prallblechen, in der eine Direktkondensation mit rückgekühlter Salzsäure stattfindet, die am Kopf der Kolonne 3 aufgegeben wird. Dabei passiert das unten eintretende Reaktionsgasgemisch im Gegenstrom die herablaufende gekühlte Salzsäure, wobei praktisch der gesamte Wasserdampf zusammen mit der Menge an HCl-Gas, die dem thermodynamischen Gleichgewicht bei den eingestellten Temperaturen entspricht, als Reaktionswasser auskondensiert. Aus der Kolonne 3 läuft also immer vollständig gesättigte Salzsäure ab, die mittels der Pumpe 4 umgepumpt und in einem Teilstrom (ca. 92 %) zurück auf den Kopf der Kolonne 3 geführt wird. Ein weiterer Salzsäureteilstrom (ca. 3 %) wird am Kopf der Kolonne 3 abgezweigt und zum Einspritzkühler 2 gefördert. Im Wärmetauscher 5 des Salzsäurekreislaufs wird die umgepumpte Salzsäure gekühlt. Der restliche Teil (ca. 5 %) der in der Kolonne 3 gebildeten Salzsäure, der der Reaktionswassermenge entspricht, wird ausgeschleust und einer Strip- und Purge- Gasaufbereitung zugeführt, die weiter unten beschrieben wird.

Das in der Gegenstromkolonne verbleibende Reaktionsgas, das aus $Cl_2$, $O_2$, und $N_2$, sowie aus einem Restanteil von Wasserdampf und gasförmiger HCl besteht, wird zur Nachtrocknung einem Schwefelsäure-Waschturm 6 zugeführt. Die gemeinsame Kondensation von Reaktionswasser und HCl, die zur Bildung thermisch gesättigter Salzsäure in der Gegenstromkolonne 3 führt, hat einen sehr niedrigen Wasserdampfpartialdruck in dem zur Nachtrocknung weitergeleiteten Reaktionsgas zur Folge, so daß der Verbrauch an Trocknungsmittel (hier Schwefelsäure) klein gehalten werden kann.

Nach dem Durchlaufen der Nachtrocknung wird das wasserfreie Reaktionsgasgemisch in einem Verdichter 7 auf einen Druck von 1 bis 30 bar, bevorzugt 2 bis 10 bar komprimiert und in einem darauffolgendem, als Entspannungskühler ausgebildeten Chlor-Rekuperator 8 soweit abgekühlt, daß sich das Chlor bis auf einen kleinen Restanteil (ca. 10 - 20 %) verflüssigt. Dabei wird die für den Chlor-Rekuperator 8 erforderliche Kälteleistung durch Entspannung und Verdampfung von flüssigem, aus dem Chlor-Rekuperator ablaufenden Chlor auf der Sekundärseite des Rekuperators 8 bereitgestellt. Das gewonnene, flüssige Chlor wird also gleichzeitig als Kältemittel genutzt. Auf diese Weise können im Chlor-Rekuperator 8 problemlos Temperaturen von -10°C bis -15 °C eingestellt werden.

Der im Chlor-Rekuperator 8 abgetrennte flüssige Chlorhauptstrom kann zur Nachreinigung in eine Destillationskolonne 9 weitergeleitet werden, in der das Chlor von restlichem gelöstem HCl, Sauerstoff und ggf. weiteren Inertgasen, z.B. Stickstoff, befreit wird. Das am Kopf der Destillationskolonne abgezogene, im wesentlichen aus HCl, Chlor, Sauerstoff und weiteren Inerten bestehende Gas wird auf die Saugseite des Kompressors 7 zurückgeführt. Das gereinigte, flüssige Chlor wird als Verfahrensprodukt am Boden der Destillationskolonne 9 entnommen und in einem Tank 10 aufgefangen. Aus dem Tank 10 wird das Chlor flüssig entnommen und im Chlor-Rekuperator 8, wie oben beschrieben, entspannt und verdampft und auf diese Weise als Kältemittel verwendet. Das aus dem Chlor-Rekuperator 8 am Ausgangsstutzen 23 austretende, gasförmige Chlor wird an Verbraucher weitergegeben, die Chlor bei chemischen Prozessen als Ausgangsstoff einsetzen.

Die am Chlor-Rekuperator 8 nicht auskondensierten Reaktionskomponenten einschließlich des Chlorrestanteils werden am Kopf abgezogen und zumindest teilweise in einer Nachkühlstufe 11 verflüssigt, dessen Betriebstemperatur mit -20°C bis -30°C deutlich niedriger liegt, als die Temperatur im Chlor-Rekuperators 8. Das nachverflüssigte Chlor wird mit dem Chlorhauptstrom aus dem Chlor-Rekuperator 8 vereinigt. Das verbleibende Abgas enthält dann nur noch verhältnismäßig geringe Anteile Chlor, nicht umgesetzte HCl, nicht umgesetzten Sauerstoff, sowie Inertgasanteile von anderen Verunreinigungen. Dieser Gasstrom wird über eine Entspannungsdrossel 12 und eine Vorwärmstufe 13 in den Reaktor 1 rezirkuliert. Damit der Pegel von Verunreinigungen im System nicht von Durchlauf zu Durchlauf immer weiter ansteigt, muß eine Teilmenge des zum Reaktor 1 zurückgeführten Gases aus dem System ausgeschleust werden. Diese Ausschleusung erfolgt am Verzweigungspunkt 14.

Zur Nutzung der HCl- und Chloranteile im ausgeschleusten Gasstrom wird die im System vorhandene Salzsäure verwendet. Zu diesem Zweck wird das ausgeschleuste Gas in eine Absorberkolonne 15 geleitet, die mit gekühlter, wässriger, aus der Gegenstromkolonne 3 stammender Salzsäure als Arbeitsmedium betrieben wird. Da die aus der Gegenstromkolonne 3 ablaufende Salzsäure gesättigt ist, muß sie vorher abgereichert werden. Die Abreicherung erfolgt in einer HCl-Ausblasekolonne oder Strip-Kolonne 16, bei der als Schleppgas der Sauerstoff benutzt wird, der dem Reaktor 1 als Edukt zugeführt wird. Die Strip-Kolonne 16 kann ggf. beheizt werden. Die Strip-Gase, bestehend aus Chlor, HCl und Sauerstoff werden am Kopf abgezogen und in den Reaktor 1 zurückgeleitet. Die abgereicherte Salzsäure wird am Boden der Strip-Kolonne 16 abgezogen und mittels der Pumpe 17 über einen Kühler 18 oben in die Absorberkolonne 15 eingespeist. Die Absorberkolonne arbeitet besonders vorteilhaft unter dem Druck der komprimierten Produktgase. Der zu reinigende, von der Nachkühlstufe 11 kommende Rücklaufgasstrom (Purge-Gasstrom) wird dazu im Gegenstrom durch die Absorberkolonne 15 geschickt. Die Salzsäure nimmt dabei unter Aufstarkung die HCl-Anteile aus dem Gasrücklaufstrom auf. Gleichzeitig gewährleistet die gute Löslichkeit von Chlor in konzentrierter Salzsäure, daß der Purge-Gasstrom außer von HCl auch von Chlor befreit wird. Die von Chlor und HCl befreiten Inertgase werden am Kopf der Absorberkolonne 15 ausgeschleust.

Die durch die Aufnahme von HCl aus dem Purge-Gasstrom wieder angereicherte und mit Chlor beladene Salzsäure wird anschließend durch die Drossel 20 auf das Druckniveau der Strip-Kolonne 16 entspannt und mit dem von der Gegenstromkolonne 3 kommenden Salzsäurestrom vor dem Eintritt in die Strip-Kolonne 16 vereinigt. Der in der Strip-Kolonne 16 als Schleppgas verwendete Sauerstoff nimmt somit neben dem gasförmigen HCl auch das Chlor aus dem rückgeführten Salzsäureteilstrom auf, das zusammen mit den anderen Stripgasen, wie oben schon erwähnt, in den Reaktor 1 zurückgeleitet wird. Die als Nebenprodukt gewonnene Salzsäure (am Boden der Strip-Kolonne 16) ist somit chlorfrei.

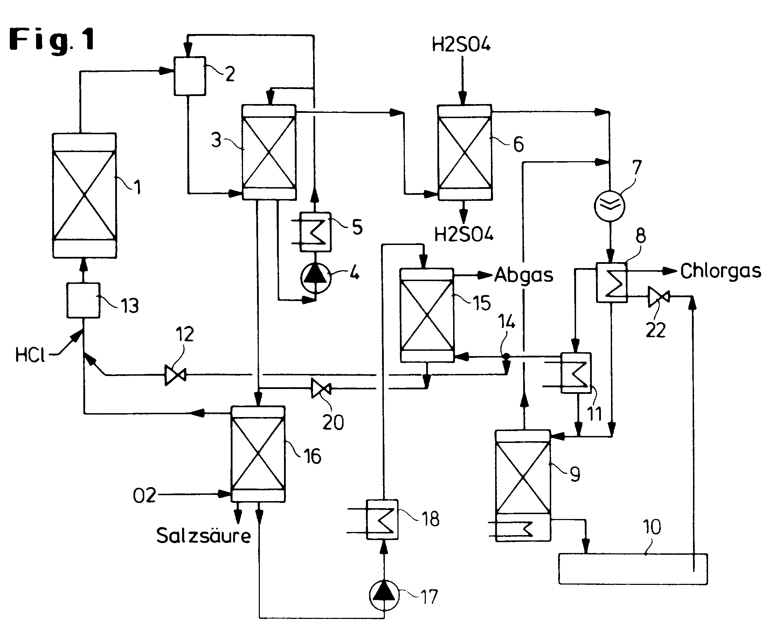

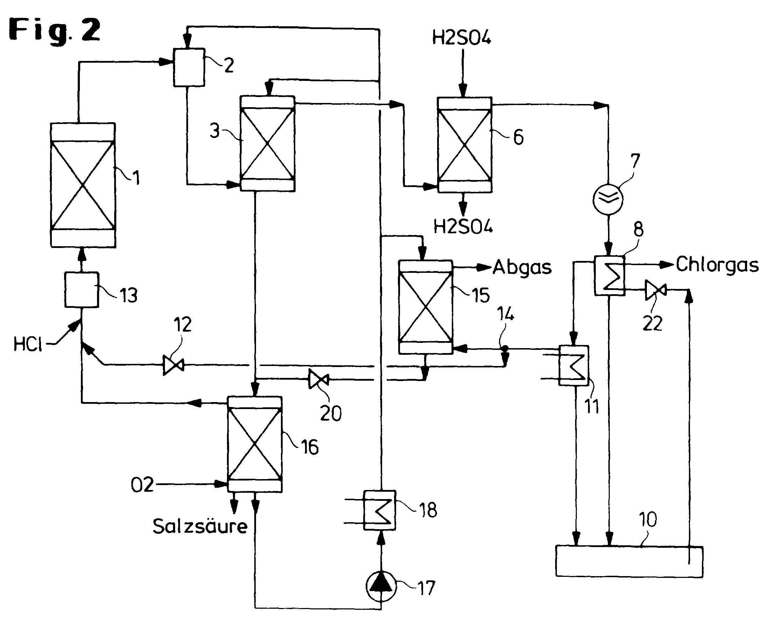

Gemäß einer Verfahrensvariante, die in Fig. 2 dargestellt ist, werden die HCl-Gasanteile, die bei dem Verfahren gem. Fig. 1 unter Sättigungsbedingungen nicht in der Gegenstromkolonne 3 ausgeschieden werden konnten und damit in den nachfolgenden Verfahrensschritten (Schwefelsäure-Waschturm 6, Chlorverflüssigung 8, 11, Chlordestillation 9, Absorberkolonne 15) weiterverarbeitet werden mußten, direkt aus der Gegenstromkolonne 3 entfernt und anschließend in den Reaktor 1 zurückgeführt. Der Vorteil liegt darin, daß dadurch die Inertgasbelastung in den nachfolgenden Stufen, insbesondere bei der Chlorverflüssigung 8, 11 um den nicht unerheblichen Anteil von HCl-Gas vermindert wird. Zu diesem Zweck wird die Anlage in der Weise modifiziert, daß eine zusätzliche Rezirkulation von abgereicherter, gekühlter Salzsäure in die Gegenstromkolonne 3 erfolgt. Diese Modifizierung wird durch eine Rückleitung 21 realisiert, die von dem Salzsäurekühler 18 direkt zum Kopf der Gegenstromkolonne 3 führt (s. Fig. 2). Die zum Betrieb der unter Druck betriebenen Absorberkolonne 15 erforderliche, gekühlte, abgereicherte Salzsäure wird, an der Rückleitung 21 abgezweigt. Durch die Rückführung der in der Strip-Kolonne 16 abgereicherten, gekühlten Salzsäure wird in der Gegenstromkolonne 3 eine erhöhte HCl-Aufnahmekapazität geschaffen. In der Gegenstromkolonne 3 findet, da abgereicherte Salzsäure angeboten wird, wird eine weitere Lösung von HCl-Gas und damit Bindung an die zusätzlich bereitgestellte, gekühlte und abgereicherte, rezirkulierte Salzsäure statt. Damit wird erreicht, daß die aus der Gegenstromkolonne 3 austretende und im System umlaufende HCl-Gasmenge eine Zehnerpotenz niedriger ist, als bei der ersten Verfahrensvariante. Deshalb kann bei dieser Verfahrensvariante auf die Chlordestilllation (Destillationskolonne 9) verzichtet werden.

An Hand der Figuren 1 und 2 wurden die bestmöglichen Ausführungsformen der Erfindung beschrieben. Im Zuge einer vereinfachten, noch im Rahmen der Erfindung liegenden Verfahrensweise könnten z.B. die Chlornachverflüssigung 11, die Gasbehandlung in der Absorberkolonne 15 und die Salzsäureaufbereitung in der Strip-Kolonne 16 weggelassen werden, wenn geringere Anforderungen an die Ausbeute und Reinheit gestellt werden.

### Ausführungsbeispiele

### Beispiel 1

In den Prozeß der Direktoxidation von Chlorwasserstoff zu Chlor werden stündlich 3750 kg HCl und 823 kg Sauerstoff eingesetzt. Zusätzlich werden ca 80 kg Fremdgase eingeschleppt (s. Fig. 1).

Der Produktgastrom nach Verlassen des Reaktors 1 enthält 3800 kg/h Chlor, 1825 kg/h nicht umgesetzte HCl, 187 kg/h nicht umgesetzten Sauerstoff, 828 kg/h Reaktionswasser und 165 kg/h Inerte, wobei in den Reaktor neben den Einsatzgasen auch Recyclegase aus der Aufarbeitung eingespeist werden.

Nach Verlassen der Gegenstromkolonne 3 ist der Wassergehalt im Produktgasstrom auf 41 kg/h und der HCl-Anteil auf 1475 kg/h zurückgegangen. Die übrigen Anteile im Produktgas sind praktisch unverändert.

Nach der Trocknung im Schwefelsäure-Trokkenturm 6 wird der Produktgasstrom im Verdichter 7 auf 7 bar verdichtet, im Chlor-Reküperator 8 verflüssigt und läuft als Flüssigchlor roh über die Destillationskolonne 9 und von dort als Flüssigchlor rein in den Chlortank 10. Der in das Netz zum Verbraucher abgegebene Chlorstrom wird als Flüssigchlor dem Tank 10 entnommen, in einer Drossel 22 entspannt, kühlt sich dabei entsprechend dem Abgabedruck von 1,5 bar auf -25°C ab, entzieht bei seiner Verdampfung dem verdichteten Chlor die Kondensationswärme auf der Druckseite des Chlor-Rekuperators 8 und verflüssigt dies bei etwa -10°C. Der Kopfgasstrom aus dem Chlor-Rekuperator 8 enthält noch Chloranteile, die bei tieferen Temperaturen (-25°C) in der Nachkühlstufe 11 nachverflüssigt werden. Das hier ablaufende Flüssigchlor roh vereinigt sich mit dem Hauptstrom und wird in der Chlordestillationskolonne 9 von HCl-Anteilen befreit. Von im Rohchlor gelösten 581 kg/h HCl gelangen lediglich 30 kg/h in den Strom Flüssigchlor rein.

Das Abgas aus der Nachkühlstufe 11 wird in diesem Beispiel zu gleichen Teilen als Recyclegas zurück in den Reaktor 1 geschickt bzw. als Purgegasstrom unter dem Druck aus der Chlorverdichtung in die Absorberkolonne 15 des Absorber-Stripper-Systems geschickt. Es enthält an dieser Stelle 723 kg/h HCl, 302 kg/h Chlor, 94 kg/h Sauerstoff sowie 83/h kg Inerte und wird in der Absorberkolonne 15 im Gegenstrom mit herabfließender konzentrierter Salzsäure, die deutlich unter deren Sättigigungsbedingungen abgekühlt ist, in Austausch gebracht. Diese Salzsäure hat ein hohes Aufnahmevermögen für HCl-Gas und bietet eine gute Löslichkeit für Chlorgas. Es genügt bei diesen Beladungen des Purge-gasstroms eine durch das Absorber-Stripper-System zirkulierende Salzsäuremenge von 15000 kg/h, um den Purgegasstrom bis auf 0,2/h kg Chlor und 8,3 kg/h HCl zu reinigen und als Abgasstrom auszuschleusen.

Die beladene und über die Solvationswärme um 10 K aufgewärmte Salzsäure wird auf 1,3 bar reduziert und gemeinsam mit der aus der Gegenstromkolonne 3 ablaufenden heißen Salzsäure auf die Strip-Kolonne 16 gegeben. Der Einsatzsauerstoff mit einer Menge von 823 kg/h nimmt als Schleppgas das gelöste Chlor mit 303 kg/h und überschüssiges HCl mit einer Menge von 638 kg/h auf und vereinigt sich mit dem Recyclegas vor einer Vorwärmstufe vor dem Eintritt in den Reaktor 1. Die Salzsäure wird dabei durch Entzug von Lösungswärme abgekühlt und in die Absorberkolonne 15 zurückgepumpt. Die dem Reaktionswasser entsprechende Salzsäuremenge wird als 35 %ige Salzsäure ausgeschleust. Auf eine Abreicherung unter Rückführung der HCl-Anteile in den Prozeß wurde hierbei verzichtet.

### Beispiel 2

In einer Verfahrensvariante (s. Fig. 2) wird der gesamte, die Gegenstromkolonne 3 durchlaufende Salzsäurestrom durch die Strip-Kolonne 16 geschickt, im Kühler 18 gekühlt und wieder auf die Gegenstromkolonne 3 aufgegeben. Er wird vor Eintritt in die Strip-Kolonne 16 weiter erwärmt, um beim Stripvorgang mit dem Einsatzsauerstoff unter Abreicherung der Salzsäure mehr HCl-Gas aus der Gegenstromkolonne 3 unmittelbar in den Reaktor 1 zurückzuführen. Dieses modifizierte Verfahren hat zur Folge, daß das Produktgas nach Verlassen der Gegenstromkolonne 3 neben 3457 kg/h Chlor, 18 kg/h Wasser, nicht umgesetztem Sauerstoff sowie Inerten nur noch 55 kg/h HCl-Gas enthält, von dem nach der Chlorverflüssigung (8) nur 31 kg/h im Flüssigchlorstrom verbleiben, so daß hier auf die Chlordestillation (9 in Fig. 1) verzichtet werden kann. Der Bedarf an Fremdkälte zur Nachverflüssigung ist in diesem Beispiel aufgrund der niedrigeren HCl-Beladung des Produktgasstromes weniger als ein Drittel als im Beispiel 1.

Am Boden der Strip-Kolonne 16 wird als Bei-Produkt die dem Reaktionswasser entsprechende Salzsäuremenge von 29 %-iger Salzsäure aus dem System ausgeschleust.

Literaturverzeichnis

[1] Chem. Eng., Okt 11, 1976, S.86 - 87

[2] DE-OS 1963946

[3] The Chemical Engineer, March 1968, S. CE 41 - 45

[4] EP 0233 773

[5] PCT Anmeldung WO 90/15017

[6] DE-OS 1467142

[7] US 4394367

[8] EP 0 517 427

**Patentansprüche**

1. Verfahren zur Aufarbeitung des in einem Reaktor bei der Oxidation von Chlorwasserstoff zu Chlor und Wasser entstehenden Reaktionsgases aus Chlor, Chlorwasserstoff, Sauerstoff und Wasserdampf, dadurch gekennzeichnet,

   a) daß das aus dem Reaktor (1) austretende Reaktionsgas soweit abgekühlt wird, daß Reaktionswasser und Chlorwasserstoff in Form von konzentrierter Salzsäure auskondensieren,

   b) daß die konzentrierte Salzsäure in einer Phasentrennkolonne (3) von dem Reaktionsgas abgetrennt und ausgeschleust wird,

   c) daß das verbleibende, im wesentlichen von Wasser und einem Teil des Chlorwasserstoffs befreite Reaktionsgas durch einen Trockenturm (6) geführt und dabei nachgetrocknet wird,

   d) daß das aus dem Trockenturm (6) austretende nachgetrocknete Reaktionsgas aus Chlor, Sauerstoff und Chlorwasserstoff durch einen Verdichter (7) auf 1 bis 30 bar, vorzugsweise 2 bis 10 bar komprimiert wird,

   e) daß das komprimierte Reaktionsgas durch einen gekühlten Chlor-Rekuperator (8) geleitet wird, wobei das Chlor zum größten Teil verflüssigt wird und die benötigte Kühlleistung im Chlor-Rekuperator (8) durch Entspannung und Verdampfung des komprimierten, aus dem Chlor-Rekuperator (8) ablaufenden, flüssigen Chlors erzeugt wird und

   f) daß die im Chlor-Rekuperator (8) nicht auskondensierbaren Komponenten des Reaktionsgases zumindest teilweise in den Reaktor (1) zurückgeführt werden.

2. Verfahren nach Anspruch 1, dadurch gekennzeichnet, daß das heiße Reaktionsgas unmittelbar nach Verlassen des Reaktors (1) in einem Einspritzkühler (2) mit gekühlter konzentrierter Salzsäure in Kontakt gebracht wird.

3. Verfahren nach Anspruch 2, dadurch gekennzeichnet, daß das im Einspritzkühler (2) entstandene Reaktionsgas-Kondensatgemisch durch einen aus einer Gegenstromkolonne (3) bestehenden Phasentrennapparat geführt wird, an deren Boden die flüssige Salzsäure ausgeschleust wird und daß ein Salzsäureteilstrom abgezweigt, gekühlt und durch die Gegenstromkolonne (3) rezirkuliert wird, wobei nahezu die gesamten Wasserdampfanteile auskondensieren und die im Kondensat gelösten Chlorwasserstoffanteile als konzentrierte Salzsäure vom Reaktionsgas abgetrennt werden.

4. Verfahren nach Anspruch 1 - 3, dadurch gekennzeichnet,

   a) daß die im Chlor-Rekuperator (8) nicht auskondensierten Reaktionskomponenten zumindest teilweise in einer Nachkühlstufe (11) auskondensiert werden,

   b) daß die in der Nachkühlstufe (11) auskondensierten Chloranteile mit dem aus dem Chlor-Rekuperator (8) austretenden Chlorhauptstrom vereinigt werden und

   c) daß die restlichen, in der Nachkühlstufe (11) nicht auskondensierten Chloranteile zusammen mit den verbleibenden nicht kondensierbaren Reaktionskomponenten in den Reaktor (1) zurückgeführt werden.

5. Verfahren nach Anspruch 4, dadurch gekennzeichnet,

   a) daß ein Teilstrom der restlichen, in der Nachkühlstufe (11) nicht auskondensierten Gasanteile in eine Absorberkolonne (15) geleitet wird und dort mit gekühlter Salzsäure gewaschen wird,

   b) daß die in der Absorberkolonne (15) anfallende und mit Chlor und Chlorwasserstoff beladenene Salzsäure entspannt und mit der aus der Gegenstromkolonne (3) ausgeschleusten Salzsäure vereinigt wird

c) und daß die von Chlor und Chlorwasserstoffen befreiten Inertgase aus der Absorberkolonne (15) ausgeschleust werden.

6. Verfahren nach Anspruch 1 - 5, dadurch gekennzeichnet, daß die aus der Gegenstromkolonne (3) ausgeschleuste Salzsäure in einer Strip-Kolonne (16) unter Einsatz eines Schleppgases und ggf. unter Zufuhr von Fremdwärme von Chlor und überschüssigem Chlorwasserstoff befreit wird und daß die Strip-Gase, bestehend aus Chlor, Chlorwasserstoff und Sauerstoff in den Reaktor (1) zurückgeführt werden, während ein Teil der in der Strip-Kolonne (16) gereinigten Salzsäure ausgeschleust wird.

7. Verfahren nach Anspruch 6, dadurch gekennzeichnet, daß der Strip-Kolonne (16) Sauerstoff als Schleppgas zugeführt wird, der nach dem Verlassen der Strip-Kolonne (16) als Edukt in den Reaktor (1) weitergeleitet wird.

8. Verfahren nach Anspruch 6 - 7, dadurch gekennzeichnet, daß die in der Absorberkolonne (15) benötigte Salzsäure von der aus der Strip-Kolonne (16) austretenden gereinigten, abreicherten und gekühlten Salzsäure abgezweigt wird.

9. Verfahren nach Anspruch 6 - 8, dadurch gekennzeichnet, daß ein Teilstrom der aus der Strip-Kolonne (16) ausgeschleusten gereinigten Salzsäure gekühlt und durch die Gegenstromkolonne (3) rezirkuliert wird, sodaß der Gegenstromkolonne (3) ständig gegenüber dem thermodynamischen Gleichgewichtszustand abgereicherte Salzsäure zugeführt wird, die gasförmige HCl aufnehmen kann.

10. Verfahren nach Anspruch 1 - 8, dadurch gekennzeichnet,

a) daß der aus dem Chlor-Rekuperator (8) austretende, flüssige Chlorhauptstrom in einer Destillationskolonne (9) von darin gelösten Chlorwasserstoff, Sauerstoff und ggf. Inertgasen befreit wird,

b) daß die am Kopf der Destillationskolonne (9) abgezogenen, im wesentlichen aus Chlorwasserstoff, Chlor und Sauerstoff bestehenden gasförmigen Bestandteile in den Verdichter (7) zurückgeführt werden

c) und daß das gereinigte Chlor der Destillationskolonne (9) als Verfahrensprodukt entnommen wird.

11. Verfahren nach Anspruch 10, dadurch gekennzeichnet, daß das gereinigte flüssige Chlor aus der Destillationskolonne (9) als Kühlmittel zur Verflüssigung des komprimierten Gases im Chlor-Rekuperator (8) verwendet, dort verdampft und gasförmig an einen Verbraucher weitergegeben wird.

12. Verfahren nach Anspruch 1 - 11, dadurch gekennzeichnet, daß die beiden gasförmigen Edukte Sauerstoff und Chlorwasserstoff nach der Reaktionsgleichung

$$4\,HCl + O_2 \Rightarrow 2\,Cl_2 + 2\,H_2O$$

in einem als Phasenkontaktapparat ausgebildeten Reaktor (1) mit einer heißen $CuCl_2$ - Salzschmelze als Katalysator in Kontakt gebracht werden und miteinander reagieren.

13. Verfahren nach Anspruch 12, dadurch gekennzeichnet, daß als Phasenkontaktapparat ein Rieselfilmreaktor verwendet wird.

14. Verfahren nach Anspruch 12, dadurch gekennzeichnet, daß als Phasenkontaktapparat eine Blasensäule, ein Schlaufenreaktor, ein Sprühturm, ein Düsenreaktor, eine Siebbodenkolonne oder eine Glockenbodenkolonne verwendet wird.

15. Verfahren nach Anspruch 1-11, dadurch gekennzeichnet, daß die beiden gasförmigen Edukte Sauerstoff und Chlorwasserstoff in einem als Phasenkontaktapparat ausgebildeten Reaktor mit einem festen Katalysator in einem Festbett oder Wirbelbett in Kontakt und miteinander zur Reaktion gebracht werden.

**Claims**

1. Process for working up the reaction gas consisting of chlorine, hydrogen chloride, oxygen and water vapour produced in a reactor during the oxidation of hydrogen chloride to chlorine and water, characterised in that,

a) the reaction gas leaving the reactor (1) is cooled until the water of reaction and hydrogen chloride condense in the form of concentrated hydrochloric acid,

b) the concentrated hydrochloric acid is separated from the reaction gas in a phase separation column (3) and discharged,

c) the remaining reaction gas, from which the substantial proportion of the water and a proportion of the hydrogen chloride has been removed, is passed through a drying tower (6) and thus post-dried,

d) the post-dried reaction gas consisting of chlorine, oxygen and hydrogen chloride leaving the drying the tower (6) is compressed to 1 to 30 bar, preferably 2 to 10 bar, by a compressor (7),

e) the compressed reaction gas is passed through a cooled chlorine recuperation (8), wherein the chlorine is very largely liquefied and the cooling capacity required in the chlorine recuperation (8) is produced by depressurising and vaporising the compressed, liquid chlorine leaving the chlorine recuperation (8) and

f) the components of the reaction gas which could not be condensed in the chlorine recuperation (8) are at least partially returned to the reactor (1).

2. Process according to claim 1, characterised in that, immediately on leaving the reactor (1), the hot reaction gas is brought into contact with cooled concentrated hydrochloric acid in an injection condenser (2).

3. Process according to claim 2, characterised in that the reaction gas/condensate mixture produced in the injection condenser (2) is passed through a phase separation apparatus consisting of a counter-current column (3), at the bottom of which the liquid hydrochloric acid is discharged and that a partial stream of hydrochloric acid is branched off, cooled and recirculated through the counter-current column (3), wherein virtually all the water vapour condenses and the hydrogen chloride dissolved in the condensate is separated from the reaction gas as concentrated hydrochloric acid.

4. Process according to claims 1-3, characterised in that

a) the reaction components which have not condensed in the chlorine recuperation (8) are at least partially condensed in a post-cooling stage (11),

b) the chlorine condensed in the post-cooling stage (11) is combined with the principal stream of chlorine leaving the chlorine recuperation (8) and

c) the remaining chlorine which has not condensed in the post-cooling stage (11) is returned together with the remaining non-condensable reaction components to the reactor (1).

5. Process according to claim 4, characterised in that

a) a partial stream of the remaining gas fractions which have not condensed in the post-cooling stage (11) is passed into an absorber column (15) and scrubbed therein with cooled hydrochloric acid,

b) the hydrochloric acid occurring in the absorber column (15) and laden with chlorine and hydrogen chloride is depressurised and combined with the hydrochloric acid discharged from the counter-current column (3)

c) and the inert gases from which the chlorine and hydrogen chloride have been removed are discharged from the absorber column (15).

6. Process according to claims 1-5, characterised in that chlorine and excess hydrogen chloride are removed from the hydrochloric acid discharged from the counter-current column (3) in a stripping column (16) using a carrier gas and optionally with an input of extrinsic heat and that the stripping gases, which consist of chlorine, hydrogen chloride and oxygen, are returned to the reactor (1), while a proportion of the hydrochloric acid purified in the stripping column (16) is discharged.

7. Process according to claim 6, characterised in that oxygen is introduced into the stripping column (16) as the carrier gas, which, once it has left the stripping column (16), is passed into the reactor (1) as an educt.

8. Process according to claims 6-7, characterised in that the hydrochloric acid required in the absorber column (15) is branched off from the purified, depleted and cooled hydrochloric acid leaving the stripping column (16).

9. Process according to claims 6-8, characterised in that a partial stream of the purified hydrochloric acid discharged from the stripping column (16) is cooled and recirculated through the counter-current column (3), such that hydrochloric acid depleted with regard to the thermodynamic equilibrium is constantly introduced into the counter-current column (3), which hydrochloric acid is capable of absorbing gaseous HCl.

10. Process according to claims 1-8, characterised in that

a) hydrogen chloride, oxygen and optionally inert gases dissolved in the principal stream of liquid chlorine leaving the chlorine recuperation (8) are removed therefrom in a distillation column (9),

b) the gaseous constituents drawn off from the top of the distillation column (9) substantially consisting of hydrogen chloride, chlorine and oxygen are returned to the compressor (7)

c) and the purified chlorine is drawn off from the distillation column (9) as the product of the process.

11. Process according to claim 10, characterised in that the purified liquid chlorine from the distillation column (9) is used as a refrigerant for liquefying the compressed gas in the chlorine recuperation (8), is vaporised therein and passed in gaseous form to a consuming plant.

12. Process according to claims 1-11, characterised in that the two gaseous educts oxygen and hydrogen chloride are brought into contact in a reactor (1) consisting of a phase contact apparatus with a hot CuCl$_2$ melt as catalyst in accordance with the reaction equation:

$$4\ HCl + O_2 \Rightarrow 2\ Cl_2 + 2\ H_2O$$

and react with each other.

13. Process according to claim 12, characterised in that a trickle film reactor is used as the phase contact apparatus.

14. Process according to claim 12, characterised in that a bubble column, a loop reactor, a spray tower, a jet reactor, a perforated-plate column or a bubble-plate column is used as the phase contact apparatus.

15. Process according to claims 1-11, characterised in that the two gaseous educts oxygen and hydrogen chloride are brought into contact in a reactor consisting of a phase contact apparatus with a fixed or fluidised bed of a solid catalyst and are reacted with each other.

## Revendications

1. Procédé pour le traitement du gaz réactionnel qui se forme dans un réacteur lors de l'oxydation de gaz chlorhydrique pour obtenir du chlore et de l'eau, constitué par du chlore, du gaz chlorhydrique, de l'oxygène et de la vapeur d'eau, caractérisé

a) en ce qu'on refroidit le gaz réactionnel quittant le réacteur (1) jusqu'à ce que l'eau réactionnelle et le gaz chlorhydrique se séparent par condensation sous la forme d'acide chlorhydrique concentré,

b) en ce qu'on sépare du gaz réactionnel l'acide chlorhydrique concentré dans une colonne de séparation de phases (3) et on l'écluse au-dehors,

c) en ce qu'on guide à travers une colonne sécheuse (6) le gaz réactionnel subsistant libéré essentiellement de l'eau et d'une partie du gaz chlorhydrique, et on le soumet en l'occurrence à un séchage ultérieur,

d) en ce qu'on comprime le gaz réactionnel constitué par du chlore, de l'oxygène et du gaz chlorhydrique quittant la colonne sécheuse (6) et qui a subi un séchage ultérieur, à travers un condenseur (7), jusqu'à une pression de 1 à 30 bar, de préférence de 2 à 10 bar,

e) en ce qu'on guide le gaz réactionnel comprimé à travers un récupérateur de chlore refroidi (8) dans lequel le chlore est liquéfié pour sa majeure partie, et on obtient la capacité de refroidissement requise dans le récupérateur de chlore (8) par détente et par évaporation du chlore liquide comprimé quittant le récupérateur de chlore (8), et

f) en ce qu'on recycle les composants du gaz réactionnel qui ne peuvent être séparés par condensation dans le récupérateur de chlore (8), au moins en partie dans le réacteur (1).

2. Procédé selon la revendication 1, caractérisé en ce qu'on amène le gaz réactionnel chaud, immédiatement après qu'il a quitté le réacteur (1), en contact, dans un refroidisseur à injection (2), avec de l'acide chlorhydrique concentré refroidi.

3. Procédé selon la revendication 2, caractérisé en ce que le mélange de gaz réactionnel-condensat obtenu dans le refroidisseur à injection (2) est guidé à travers un appareil de séparation de phases constitué par une colonne (3) travaillant à contre-courant, au bas de laquelle on écluse au-dehors l'acide chlorhydrique liquide et en ce qu'on dévie un courant partiel d'acide chlorhydrique, on le refroidit et on le remet en circulation à travers la colonne (3) travaillant à contre-courant, dans lequel pratiquement la totalité des fractions de vapeurs d'eau se séparent par condensation et les fractions de gaz chlorhydrique dissoutes dans le condensat sont séparées du gaz réactionnel sous la forme d'acide chlorhydrique concentré.

**4.** Procédé selon les revendications 1 à 3, caractérisé

a) en ce que les composants réactionnels, qui n'ont pas été séparés par condensation dans le récupérateur de chlore (8), sont séparés par condensation au moins en partie dans une étape de refroidissement ultérieure (11),

b) en ce que les fractions de chlore séparées par condensation dans l'étape de refroidissement ultérieure (11) sont combinées avec le courant principal de chlore quittant le récupérateur de chlore (8), et

c) en ce que les fractions de chlore résiduel, qui n'ont pas été séparées par condensation dans l'étape de refroidissement ultérieure (11), sont recyclées de manière conjointe avec les composants réactionnels subsistants non condensables, dans le réacteur (1).

**5.** Procédé selon la revendication 4, caractérisé

a) en ce qu'on guide dans une colonne d'absorption (15) un courant partiel des fractions de gaz résiduel qui n'ont pas été séparées par condensation dans l'étape de refroidissement ultérieure (11), dans laquelle on le lave avec de l'acide chlorhydrique refroidi,

b) en ce qu'on détend l'acide chlorhydrique obtenu dans la colonne d'absorption (15) et qui est chargé avec du chlore et avec du gaz chlorhydrique, et on le combine avec l'acide chlorhydrique éclusé au-dehors de la colonne (3) travaillant à contre-courant,

c) et en ce qu'on écluse hors de la colonne d'absorption (15) les gaz inertes libérés du chlore et du gaz chlorhydrique.

**6.** Procédé selon les revendications 1 à 5, caractérisé en ce qu'on libère du chlore et du gaz chlorhydrique en excès, l'acide chlorhydrique éclusé hors de la colonne (3) travaillant à contre-courant, dans une colonne d'épuration (16) par la mise en oeuvre d'un gaz d'entraînement et, le cas échéant, par apport de chaleur externe, et en ce qu'on recycle les gaz provenant de la colonne d'épuration constitués de chlore, de gaz chlorhydrique et d'oxygène dans le réacteur (1), tandis que l'on écluse au-dehors une partie de l'acide chlorhydrique purifié dans la colonne d'épuration (16).

**7.** Procédé selon la revendication 6, caractérisé en ce qu'on achemine à la colonne d'épuration (16) de l'oxygène à titre de gaz d'entraînement que l'on achemine en tant qu'éduit dans le réacteur (1) après qu'il a quitté la colonne d'épuration (16).

**8.** Procédé selon les revendications 6 et 7, caractérisé en ce que l'acide chlorhydrique requis dans la colonne d'absorption (15) est détaché de l'acide chlorhydrique purifié, appauvri et refroidi provenant de la colonne d'épuration (16).

**9.** Procédé selon les revendications 6-8, caractérisé en ce qu'on refroidit un courant partiel de l'acide chlorhydrique purifié éclusé hors de la colonne d'épuration (16) et on le remet en circulation à travers la colonne (3) travaillant à contre-courant, si bien que l'on achemine en continu à la colonne (3) travaillant à contre-courant, de l'acide chlorhydrique appauvri par rapport à l'état d'équilibre thermodynamique, qui peut absorber du HCl gazeux.

**10.** Procédé selon les revendications 1-8, caractérisé

a) en ce qu'on libère le courant principal de chlore liquide quittant le récupérateur de chlore (8), dans une colonne de distillation (9), du gaz chlorhydrique, de l'oxygène et le cas échéant des gaz inertes qui y sont contenus à l'état dissous,

b) en ce qu'on recycle dans le condenseur (7) les constituants gazeux extraits à la tête de la colonne de distillation (9), constitués essentiellement de gaz chlorhydrique, de chlore et d'oxygène,

c) et en ce qu'on prélève le chlore purifié de la colonne de distillation (9) à titre de produit issu du procédé.

**11.** Procédé selon la revendication 10, caractérisé en ce qu'on utilise le chlore liquide purifié provenant de la colonne de distillation (9) à titre de réfrigérant pour la liquéfaction du gaz comprimé dans le récupérateur de chlore (8), on l'évapore dans ce dernier et on l'achemine sous forme gazeuse à un consommateur.

**12.** Procédé selon les revendications 1 à 11, caractérisé en ce qu'on amène les deux éduits gazeux, l'oxygène et le gaz chlorhydrique, conformément à l'équation réactionnelle

$$4\ HCl + O_2 \Rightarrow 2\ Cl_2 + 2\ H_2O$$

dans un réacteur (1) réalisé sous la forme d'un appareil de mise en contact de phases, en contact avec une masse fondue chaude de sel de $CuCl_2$ à

titre de catalyseur et on les soumet à une réaction réciproque.

13. Procédé selon la revendication 12, caractérisé en ce qu'on utilise, à titre d'appareil de mise en contact de phases, un réacteur à ruissellement.

14. Procédé selon la revendication 12, caractérisé en ce qu'on utilise, à titre d'appareil de mise en contact de phases, une colonne à bulles, un réacteur à boucles, une colonne de pulvérisation, un réacteur à tuyères, une colonne à plateaux perforés ou une colonne à plateaux à cloches.

15. Procédé selon les revendications 1 à 11, caractérisé en ce qu'on amène les deux éduits gazeux, l'oxygène et le gaz chlorhydrique, dans un réacteur réalisé sous la forme d'un appareil de mise en contact de phases, en contact avec un catalyseur solide dans un lit fixe ou dans un lit fluidisé et on les soumet à une réaction réciproque.

# Fig.1

Fig. 2